# EUROPEAN PATENT APPLICATION

(11) **EP 1 071 230 A1**
(43) Date of publication of application: **24.01.2001**
(21) Application number: 00114943.4
(22) Date of filing: 18.07.2000
(51) Int. Cl.: H04B 10/02, H04B 10/14, H04L 7/00

(54) **Optical communication system for transmitting in parallel a plurality of data signals**

(30) Priority: 22.07.1999 JP 20700499
(71) Applicant: NEC CORPORATION, Tokyo (JP)
(72) Inventor: Shine, Toshifumi, Minato-ku, Tokyo (JP)
(74) Representative: VOSSIUS & PARTNER

(57) **Abstract**

An optical transmission system comprising a transmitter and a receiver that does not require phase correction when the transmission frequency changes. A plurality of data signals are latched by latches based on an input clock signal and the logic level of an input clock signal is inverted. Converters convert the latched data signals and the inverted clock signal into a plurality of optical signals, and a transmitter outputs the optical signals. In a receiver, after converting the received optical signals into a plurality of electrical data signals and an electrical clock signal, the electrical data signals are latched based on the electrical clock signal to output a plurality of latched electrical data signals.

## Description

The present invention relates to an optical communication apparatus. In particular, it relates to an optical communication apparatus capable of transmitting a plurality of data signals in parallel.

Various optical transmission systems that employ an inter-printed board transmission system or a fast optical bus system have been developed to optically transmit large amounts of digital data in parallel.

A conventional optical transmission system detects signal delays for a number of data signals according to a clock signal. The conventional optical transmission adjusts the signal delays to correct delay difference (skew) between the data signals. In other conventional optical transmission systems, the receiver exercises phase control in order to correct the phase of each data signal and a clock signal for latching each data signal. Therefore, in order to correct the skew or the phase, the circuitry of such conventional optical transmission systems become very complicated. Moreover, the complexity of the circuitry increases both the manufacturing costs and the power consumption. To resolve these problems, a technique is disclosed in Japanese Unexamined Patent Publications No. Hei 5-292026 and No. Hei 5-292027. In these conventional optical communication systems, there is provided an optical parallel transmission module for simultaneous transmission of a plurality of data signals and a clock signal. The optical parallel transmission module has a pre-transmission storage register in which data signals are latched on the basis of the clock signal. There is also provided an optical parallel reception module with a post-transmission storage register. Transmitted data signals are latched into the post-transmission storage register based on an inverted clock signal. The inverted clock signal is obtained by inverting the logic level of the transmitted clock signal. The amount of data skew between the transmitted data signals is set to 1/3 or less of the cycle of the transmitted clock signal.

However, the amount of phase correction necessary must be adjusted whenever there is a change in a clock frequency that is employed. Therefore, the problems remain that hinder the acquisition of a bit-free performance for which no adjustments are required.

It is therefore an object of the present invention to provide an optical communication apparatus capable of transmitting a plurality of data signals without phase adjustment at the receiver.

Another object of the present invention is to provide an optical communication apparatus capable of transmitting in parallel a plurality of data signals at low cost and/or using a simple structure.

In order to achieve the above objects, a transmitter according to an embodiment of the present invention comprises a latch responsive to input of a plurality of data signals and a clock signal, wherein the latch latches the data signals based on the clock signal and outputs a plurality of latched data signals, an inverter responsive to the clock signal, wherein the inverter inverts the clock signal to output an inverted clock signal, and a converter responsive to the latched data signals and the inverted clock signal, wherein the converter converts the latched data signals and the inverted clock signal into a plurality of optical signals, and outputs the optical signals.

A transmitter according to a second embodiment of the present invention comprises a plurality of latches responsive to input of a plurality of data signals and a clock signal, wherein the plurality of latches latch the data signals based on the clock signal and output a plurality of latched data signals, an inverter responsive to the clock signal, wherein the inverter inverts the clock signal and outputs an inverted clock signal, and a plurality of converters responsive to the latched data signals and the inverted clock signal, wherein the plurality of converters converts the latched data signals and the inverted clock signal into a plurality of optical signals and outputs the plurality of optical signals.

A transmitter according to a third embodiment of the present invention comprises a plurality of latches responsive to input of a plurality of data signals and a clock signal, wherein the plurality of latches latch the data signals based on the clock signal and output a plurality of latched data signals, a plurality of inverters responsive to the latched data signals, wherein the plurality of inverters invert the data signals to output inverted data signals, and a plurality of converters responsive to the inverted data signals and the clock signal, wherein the plurality of converters convert the inverted data signals and the clock signal into a plurality of optical signals and output the optical signals.

In order to achieve the above objects, a receiver according to an embodiment of the present invention comprises a converter responsive to receipt of a plurality of optical data signals and an optical clock signal, wherein the converter converts the optical data signals and the optical clock signal into a plurality of electrical data signals and an electrical clock signal, respectively, and a latch responsive to the electrical data signals and the electrical clock signal, wherein the latch latches the electrical data signals based on the electrical clock signal and outputs a plurality of latched electrical data signals.

In order to achieve the above objects, an optical communication system according to an embodiment of the present invention comprises a transmitter and a receiver, wherein the transmitter further comprises a first latch responsive to input of a plurality of data signals and a clock signal, wherein the first latch latches the data signals based on the clock signal and outputs a plurality of latched data signals, a first inverter responsive to the clock signal, wherein the first inverter inverts the clock signal to output an inverted clock signal, and a first converter responsive to the latched data signals and the inverted clock signal, wherein the first converter converts the latched data signals and the inverted clock signal into a plurality of optical signals outputs the optical signals, and the receiver further comprises a second converter responsive to receipt of the optical signals, wherein the second converter converts the optical signals into a plurality of electrical data signals corresponding to the input data signals and an electrical clock signal corresponding to the input clock signal, and a second latch responsive to the electrical data signals and the electrical clock signal, wherein the second latch latches the electrical data signals based on the electrical clock signal and outputs a plurality of latched electrical data signals.

Another optical communication system according to a second embodiment of the present invention comprises a transmitter and a receiver, wherein the transmitter further comprises a plurality of first latches responsive to input of a plurality of data signals and a clock signal, wherein the plurality of first latches latch the data signals based on the clock signal and output a plurality of latched data signals, a first inverter responsive to the clock signal, wherein the first inverter inverts the clock signal and outputs an inverted clock signal, and a plurality of first converters responsive to the latched data signals and the inverted clock signal, wherein the plurality of first converters convert the latched data signals and the inverted clock signal into a plurality of optical signals and outputs the optical signals, and the receiver further comprises a plurality of second converters responsive to receipt of the optical signals, wherein the plurality of second converters convert the optical signals into a plurality of electrical data signals and an electrical clock signal, respectively, and a plurality of second latches responsive to the electrical data signals and the electrical clock signal, wherein the plurality of second latches latch the electrical data signals based on the electrical clock signal and output a plurality of latched electrical data signals.

In order to achieve the above objects, a data transmission method according to an embodiment of the present invention comprises inputting a plurality of data signals and a clock signal, latching the data signals based on the clock signal and outputting latched data signals, inverting the clock signal and outputting an inverted clock signal, and converting the latched data signals and the inverted clock signal into a plurality of optical signals.

In order to achieve the above objects, a data receiving method according to an embodiment of the present invention comprises inputting a plurality of optical data signals and an optical clock signal, converting the optical data signals and the optical clock signal into a plurality of electrical data signals and an electrical clock signal, respectively, and latching the electrical data signals based on the electrical clock signal.

In order to achieve the above objects, an optical communication method according to an embodiment of the present invention comprises inputting a plurality of data signals and a clock signal, latching the data signals based on the clock signal to output latched data signals, inverting the clock signal and outputting an inverted clock signal, converting the latched data signals and the inverted clock signal into a plurality of optical signals, transmitting the optical signals, receiving the optical signals, converting the optical signals into a plurality of electrical data signals and an electrical clock signal, and latching the electrical data signals based on the electrical clock signal.

These and other objects, features and advantages of this invention will become more fully apparent from the following detailed description taken with the accompanying drawings in which:
FIG. 1 is a diagram showing an optical communication apparatus of an embodiment according to the present invention;
FIG. 2 is a diagram showing a timing chart of an optical communication apparatus of an embodiment according to the present invention;
FIG. 3 is a diagram showing a timing chart of a conventional optical communication apparatus; and
FIG. 4 is a diagram showing an optical communication apparatus of another embodiment according to the present invention.

The preferred embodiments of the present invention will be discussed with reference to the drawings.

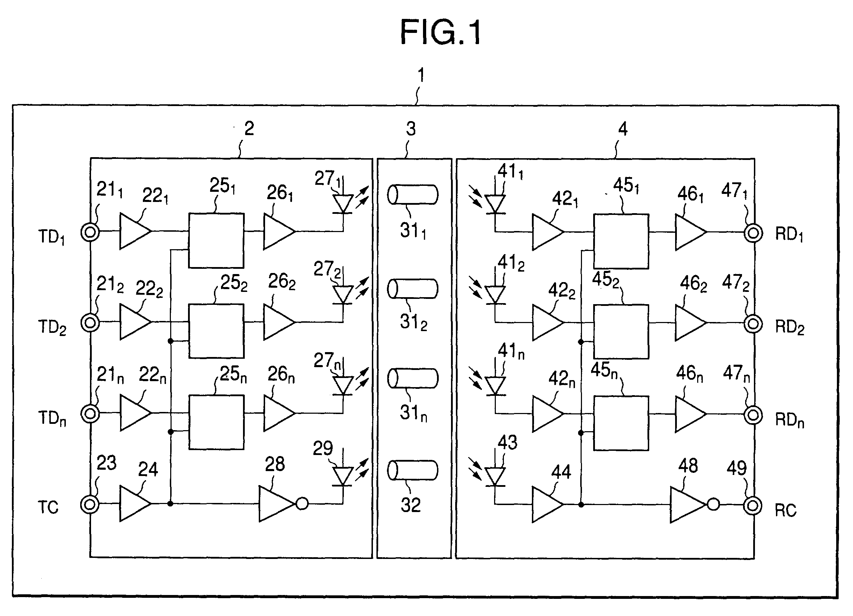

Referring to FIG. 1, an optical communication system 1 according to a first embodiment of the present invention is illustrated. The optical communication system 1 comprises a transmitter 2 that optically transmits in parallel a plurality of input data signals TD1-TDn (n is an integer greater than one) and an input clock signal TC. The optical communication system 1 further comprises a transmission line 3 along which the input data signals TD1-TDn and the input clock signal TC output from the transmitter 2 are optically transmitted in parallel. The optical communication system 1 includes a receiver 4 that receives the input data signals TD1-TDn and the clock signal TC from the transmission line 3. The receiver 4 outputs a plurality of data signals RD1-RDn in parallel and a clock signal RC.

The transmitter 2 comprises a plurality of input terminals 211-21n. A plurality of input data signals TD1-TDn are input as electrical signals. Buffers 221-22n, corresponding to the input terminals 211-21n, buffer the input data signals TD1-TDn supplied from the input terminals 211-21n, respectively. An input terminal 23 receives an input clock signal TC, which is input as an electrical signal. A buffer 24 buffers the input clock signal TC fed from the input terminal 23.

The transmitter 2 further comprises latches 251-25n that correspond to the buffers 211-21n. The input clock signal TC from the buffer 24 latches the input data signals TD1-TDn supplied from the buffers 221-22n, respectively. The transmitter 2 further comprises LD (Laser Diode) drive circuits 261-26n corresponding to the latches 251-25n. The LD (Laser Diode) drive circuits 261-26n drive the LD light-emitting devices 271-27n, respectively, in accordance with the logic of signals latched by the latches 251-25n.

The LD light-emitting devices 271-27n emit light according to the LD drive circuit 261-26n, respectively. Thus, optical data signals that correspond to the input data signals are generated.

A LD drive circuit 28 inverts the logic of a signal output from the buffer 24 and drives a LD light-emitting element 29 according to the inverted logic. The LD light-emitting device 29 emits light according to the LD drive circuit 28. Thus, an optical clock signal that corresponds to the input clock signal is generated.

The LD light-emitting devices 271-27n and the LD light-emitting device 29 may be separately formed. Alternately, a LD array device may constitute the LD light-emitting devices. In the first embodiment, the LD array device may constitute the LD light-emitting devices 271-27n and the LD light-emitting device 29.

The communication line 3 is composed of transmission paths 311-31n, along which the optical data signals generated from the LD light-emitting devices 271-27n are transmitted in parallel. The communication line 3 also includes a transmission path 32, along which the optical clock signal generated from the LD light-emitting device 29 is transmitted. In the first embodiment, the communication line 3 is formed of an optical cable such an optical fiber, and has n channels for data signal transmission and one channel for a clock signal transmission. The transmission line 3 may include at least one optical amplifier depending on the distance between the transmitter 2 and the receiver 4.

The receiver 4 of the optical communication system comprises LD light-receiving devices 411-41n that change a current flowing therein in accordance with the optical data signals transmitted from the transmitter 2 through the transmission paths 311-31n. Converters 421-42n convert the current flowing in the LD light-receiving devices 411-41n into a voltage that is output as electrical data signals.

The receiver 4 further comprises a LD light-receiving device 43 that changes a current flowing therein in accordance with an optical clock signal transmitted from the transmitter 2 through the transmission path 32. Converter 44 converts the current flowing in the LD light-emitting device 43 into a voltage that is output as an electrical clock signal.

The receiver 4 comprises latches 451-45n that latch the electrical data signals obtained by the converters 421-42n based on the electrical clock signal obtained by the converter 44. Buffers 461-46n buffer the electrical data signals latched by the latches 451-45n to output terminals 471-47n. The latched and buffered electrical data signals are output as output data signals RD1-RDn. A buffer 48 inverts the logic of the electrical clock signal obtained by the converter 44 and buffers the inverted electrical clock signal to an output terminal 4. The inverted electrical clock signal obtained by the buffer 48 is output as an output clock signal RC.

Next, the operation according to the first embodiment of the present invention will be discussed.

Referring to FIG. 1, the input data signals TD1-TDn received at the input terminals 211-21n are electrically buffered by the buffers 221-22n and supplied to the latches 251-25n. The input clock signal TC received at the input terminal 23 is electrically buffered by the buffer 24 and distributed to the latches 251-25n.

The latches 251-25n latch the supplied input data signals TD1-TDn at the timing of the trailing edge of the distributed input clock signal TC. The latches 251-25n supply the latched signals to the LD drive circuits 261-26n, respectively. The LD drive circuits 261-26n drive the LD light-emitting devices 271-27n, respectively, in accordance with the logic of the latched signals supplied from the latches 261-26n. The LD light-emitting devices 271-27n emit light as they are driven by the LD drive circuits 261-26n. For example, when the logic of the latched signal is "high", the LD light-emitting device 27 emits light. Conversely, when the logic of the latched signal is "low", the LD light-emitting device 27 does not emit light.

The input clock signal TC, which is buffered by the buffer 24, is supplied to the LD drive circuit 28. The LD drive circuit 28 inverts the logic of the supplied input clock signal TC, and drives the LD light-emitting device 29 according to the inverted logic. The LD light-emitting device 29 emits light as it is driven by the LD drive circuit 28, and when, for example, the logic of the supplied input clock signal is "high", the LD light-emitting device 27 does not emit light. Conversely, while when the logic of the supplied input clock signal is "low", the LD light-emitting device 27 emits light.

The optical signals generated from the LD light-emitting devices 271-27n are transmitted to the LD light-receiving devices 411-41n of the receiver 4 along the transmission paths 311-31n. The LD light-receiving devices 411-41n change a current flowing therein in accordance with transmitted optical signals. This changed current is converted into a voltage by the converter 421-42n. For example, when the transmitted optical signals correspond to light emission by the LD light-emitting devices 271-27n, the LD light-receiving devices 411-41n supply a current and the converters 421-42n output a voltage at a "high" level. When the transmitted optical signals correspond to non-light emission by the LD light-emitting devices 271-27n, the LD light-receiving devices 411-41n do not supply a current and the converters 421-42n output a voltage at a "low" level. That is, the LD light-receiving devices 411-41n and the converters 421-42n convert the transmitted optical signals into electrical signals, and the converters 421-42n supply the obtained electrical signals to the latches 451-45n, respectively.

The LD light-emitting device 29 generates an optical signal that is transmitted along the transmission path 32 to the LD light-receiving device 43. The LD light-receiving device 43 changes a current flowing therein in accordance with the transmitted optical signal. The converter 44 converts the current into a voltage. For example, when the transmitted optical signal corresponds to light emission by the LD light emitting device 29, the LD light-receiving device 43 supplies a current and the converter 44 outputs a voltage at a "high" level. Conversely, when the transmitted optical signal transmitted corresponds to non-light emission by the LD light emitting device 29, the LD light-receiving device 43 does not supply a current and the converter 44 outputs a voltage at a "low" level. That is, the LD light-receiving device 43 and the converter 44 convert the transmitted optical signal into an electric signal. Thereafter, the converter 44 outputs the obtained electrical signal to the latches 451-45n.

The latches 451-45n latch the electric signals supplied from the converters 421-42n at the timing of the trailing edge of the electric signal supplied from the converter 44. The latches 451-45n output the latched signals to the buffers 461-46n. The buffers 461-46n buffer the supplied latched signals and output the signals to the output terminals 471-47n as output data signals RD1-RDn.

The electrical signal obtained by the converter 44 is supplied to the buffer 48, and the buffer 48 inverts the logic of the supplied electrical signal. The buffer 48 outputs the resultant signal to the output terminal 49 as an output clock signal.

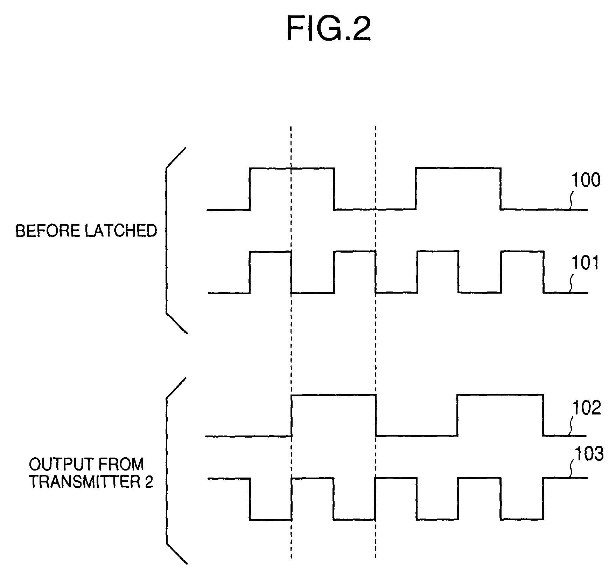

Referring to FIG. 2, a timing chart for the first embodiment is illustrated. Data signal 100 indicates one of the input data signals TD1-TDn input to the latches 251-25n, respectively. Clock signal 101 indicates the clock signal TC input to the latches 251-25n. Optical data signal 102 indicates one of the optical signals generated from the LD light-emitting device 271-27n. Optical clock signal 103 indicates the optical clock signal generated from the LD light-emitting device 29. That is, an optical data signal output from the transmitter 2 has the same phase to the optical clock signal which is obtained by delaying a clock signal by one pulse.

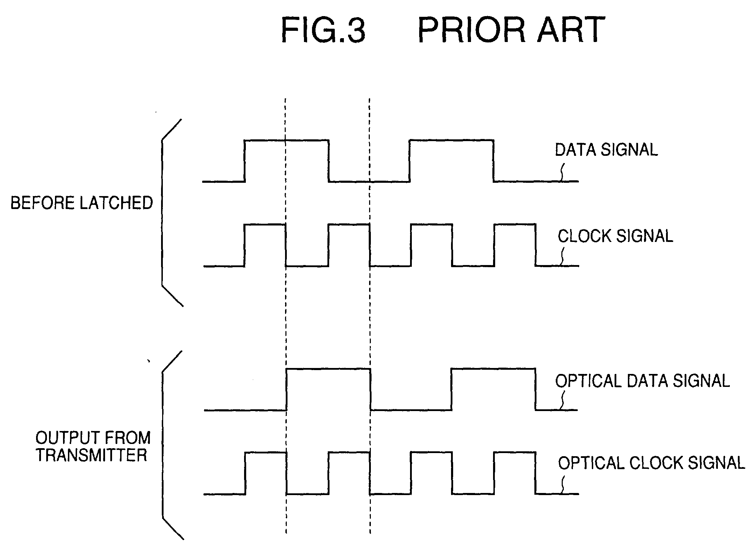

Referring to FIG. 3, a timing chart of the conventional art is shown. A signal output from a conventional transmitter has a phase that is shifted away from a signal before it is input to a latch. As is shown in FIG. 3, an optical clock signal from the conventional transmitter that does not have a buffer for inverting the logic of an input clock signal drops at the rising edge of an optical data signal therefrom.

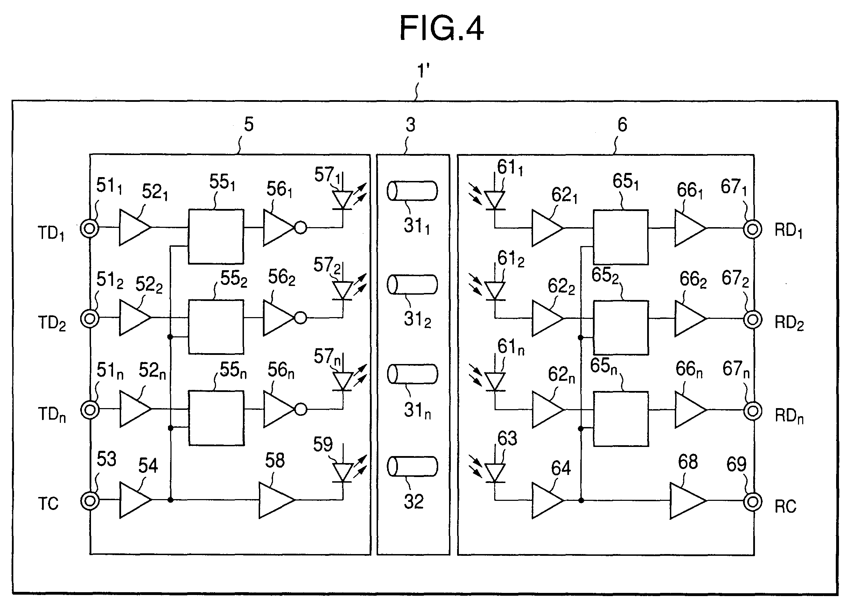

Unlike the conventional art, in the first embodiment, the logic of an input clock signal is inverted, and then the inverted clock signal is transmitted from the transmitter 2 to the receiver 4. Alternately, the logic of input data signals may be so inverted instead of the clock signal as shown in FIG. 4.

Referring to FIG. 4, a second embodiment according to the present invention is illustrated. Optical communication system 1' comprises a transmitter 5 that optically transmits a plurality of input data signals TD1-TDn (n is an integer greater than one) in parallel and also simultaneously transmits an input clock signal TC. Optical communication system 1' further comprises a transmission line 3 for transmission of the input data signals TD1-TDn and the input clock signal TC output from the transmitter 5. Optical communication system 1' further comprises a receiver 6 that receives the input data signals TD1-TDn and the clock signal TC from the transmission line 3. The receiver 6 outputs a plurality of data signals RD1-RDn in parallel along with a clock signal RC.

The transmitter 5 comprises a plurality of input terminals 511-51n. A plurality of input data signals TD1-TDn are input as electrical signals. Buffers 521-52n, corresponding to the input terminals 511-51n, buffer the input data signals TD1-TDn supplied from the input terminals 511-51n, respectively. Input terminal 53 receives an input clock signal TC that is input as an electrical signal, and a buffer 54 buffers the input clock signal TC fed from the input terminal 53. The transmitter 5 further comprises latches 551-55n, corresponding to the buffers 511-51n, that latch the input data signals TD1-TDn supplied from the buffers 521-52n based on the input clock signal TC from the buffer 54. The transmitter 5 further comprises LD (Laser Diode) drive circuits 561-56n, corresponding to the latches 551-55n, that invert the logic of signals output from the latches 551-55n and drive LD light-emitting devices 571-57n. LD light-emitting devices 571-57n emit light according to the LD drive circuit 561-56n. Thus, optical data signals corresponding to the input data signals are generated.

A LD drive circuit 58 drives a LD light-emitting element 59 according to the logic of the clock signal from the buffer 54. The LD light-emitting device 59 emits light according to the LD drive circuit 58. Thus, an optical clock signal corresponding to the input clock signal is generated.

The receiver 6 of the Optical communication system 1' comprises LD light-receiving devices 611-61n that change a current flowing therein in accordance with the optical data signals from the transmitter 5. Transmitter 5 transmits the optical data signal through the transmission paths 311-31n. Converters 621-62n convert the current flowing in the LD light-receiving devices 611-61n into a voltage to output electrical data signals. The receiver 6 further comprises a LD light-receiving device 63 that changes a current flowing therein in accordance with an optical clock signal. Transmitter 5 transmits the optical clock signal through the transmission path 32. Converter 64 converts the current flowing in the LD light-emitting device 63 into a voltage to output an electrical clock signal. Receiver 6 comprises latches 651-65n that latch the electrical data signals obtained by the converters 621-62n based on the electrical clock signal obtained by the converter 64. The latches 651-65n are designed so that they receive a signal for which the logic of the signal is negative. That is, a D-type flip-flop circuit for inverting the logic of an input signal (converting the negative logic into positive logic) and for latching the resultant signal constitutes the latch 25. Furthermore, the receiver 6 has buffers 661-66n that buffer the electrical data signals latched by the latches 651-65n. Output terminals 671-67n output the latched electrical data signals as output data signals RD1-RDn. Buffer 68 buffers the electrical clock signal from the converter 64, and output terminal 49 outputs the electrical clock signal as an output clock signal RC.

Further, when the input for the LD drive circuits 261-26n or the LD drive circuit 28 is a differential input, the logic for the input signal can be inverted by inversely wiring the input signal.

As is described above, according to the present invention, since a plurality of data signals and a clock signal are transmitted while having identical phases, no phase adjustment is required at a receiver. Thus, both the size and the manufacturing cost of the receiver can be reduced. In addition, since for phase adjustment no additional parts are required, power consumption can be reduced.

Furthermore, even when the transmitter transmits a clock signal for which the frequency has been changed, the receiver does not need to perform a phase adjustment. Therefore, a large amount of digital data can be transmitted in parallel, bit-free, without an adjustment being performed.

The invention may be embodied in other specific forms without departing from the spirit or essential characteristics thereof. The present invention embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A transmitter, comprising:
a latch responsive to a plurality of data signals and a clock signal, wherein said latch latches the data signals based on the clock signal to output a plurality of latched data signals;
an inverter responsive to the clock signal, wherein said inverter inverts the clock signal to output an inverted clock signal; and
a converter responsive to the latched data signals and the inverted clock signal, wherein said converter converts the latched data signals and the inverted clock signal into a plurality of optical signals, and outputs the optical signals.

2. The transmitter as claimed in claim 1, wherein said latch latches the data signals on a trailing edge of the clock signal.

3. The transmitter as claimed in claim 1 or 2, wherein said converter comprises at least one laser diode.

4. The transmitter as claimed in claim 1, 2 or 3, wherein said converter comprises a laser diode array device.

5. The transmitter as claimed in claim 1, 2, 3 or 4, further comprising a plurality of input terminals at which the data signals and the clock signals are input.

6. The transmitter as claimed in claim 1, 2, 3, 4 or 5, wherein said latch comprises a flip-flop circuit.

7. A transmitter, comprising:
a plurality of latches responsive to a plurality of data signals and a clock signal, wherein each of said latches latch one of the plurality of data signals based on the clock signal and outputs a latched data signal;
an inverter responsive to the clock signal, wherein said inverter inverts the clock signal to output an inverted clock signal; and
a plurality of converters responsive to the latched data signals and the inverted clock signal, wherein said converter converts each of the latched data signals and the inverted clock signal into a plurality of optical signals, and outputs the optical signals.

8. A transmitter comprising: a plurality of latches responsive to a plurality of
data signals and a clock signal, wherein said plurality of latches latch the data signals based on the clock signal and output a plurality of latched data signals;
a plurality of inverters responsive to the latched data signals, wherein said plurality of inverters inverts the plurality of latched data signals and outputs inverted data signals; and
a plurality of converters responsive to the inverted data signals and the clock signal, wherein said plurality of converters converts the inverted data signals and the clock signal into a plurality of optical signals and outputs the optical signals.

9. A receiver, comprising:
a converter responsive to a plurality of optical data signals and an optical clock signal, wherein said converter converts the plurality of optical data signals into a plurality of electrical data signals and converts the optical clock signal into an electrical clock signal; and
a latch responsive to the plurality of electrical data signals and the electrical clock signal, wherein said latch latches the electrical data signals based on the electrical clock signal to output a plurality of latched electrical data signals.

10. The receiver as claimed in claim 9, further comprising an inverter responsive to the electrical clock signal, wherein said inverter inverts the electrical clock signal to output an inverted electrical clock signal.

11. The receiver as claimed in claim 10, further comprising a plurality of output terminals that output the latched electrical data signals and the inverted electrical clock signal.

12. An optical communication system, comprising:
a transmitter and a receiver, wherein
said transmitter comprises:
a first latch responsive to a plurality of data signals and a clock signal, wherein said first latch latches the data signals based on the clock signal to output a plurality of latched data signals;
a first inverter responsive to the clock signal, wherein said first inverter inverts the clock signal to output an inverted clock signal; and
a first converter responsive to the latched data signals and the inverted clock signal, wherein said first converter converts the latched data signals and the inverted clock signal into a plurality of optical signals and outputs the optical signals; and
said receiver comprises:
a second converter responsive to the plurality of optical signals, wherein said second converter converts the optical signals into a plurality of electrical data signals corresponding to the input data signals and an electrical clock signal corresponding to the input clock signal; and
a second latch responsive to the electrical data signals and the electrical clock signal, wherein said second latch latches the electrical data signals based on the electrical clock signal to output a plurality of latched electrical data signals.

13. The optical communication system as claimed in claim 12, further comprising a second inverter responsive to the electrical clock signal, wherein said inverter inverts the electrical clock signal to output an inverted electrical clock signal.

14. The system as claimed in claim 12 or 13,
further comprising a transmission line located between said transmitter and said receiver through which the optical signals are transmitted from said transmitter to said receiver.

15. The optical communication system as claimed in claim 14, wherein said transmission line has an optical fiber.

16. The system as claimed in claim 12, 13, 14 or 15,
wherein said first converter comprises at least one laser diode.

17. The system as claimed in claim 12, 13, 14, 15 or 16,
wherein said first converter comprises a laser diode array.

18. An optical communication system, comprising:
a transmitter and a receiver, wherein
said transmitter comprises:
a plurality of first latches responsive to a plurality of data signals and a clock signal, wherein said plurality of first latches latch the data signals based on the clock signal and output a plurality of latched data signals, respectively;
a first inverter responsive to the clock signal, wherein said first inverter inverts the clock signal to output an inverted clock signal; and
a plurality of first converters responsive to the latched data signals and the inverted clock signal, wherein said plurality of first converters convert the latched data signals and the inverted clock signal into a plurality of optical signals and output the optical signals; and
said receiver comprises:
a plurality of second converters responsive to the optical signals, wherein said plurality of second converters converts the optical signals into a plurality of electrical data signals and an electrical clock signal, respectively; and
a plurality of second latches responsive to the electrical data signals and the electrical clock signal, wherein said plurality of second latches latch the electrical data signals based on the electrical clock signal to output a plurality of latched electrical data signals.

19. A data transmission method, comprising:
inputting a plurality of data signals and a clock signal;
latching the data signals based on the clock signal to output latched data signals;
inverting the logic of the clock signal to output an inverted clock signal; and
converting the latched data signals and the inverted clock signal into a plurality of optical signals.

20. A data receiving method, comprising:
inputting a plurality of optical data signals and an optical clock signal;
converting the optical data signals and the optical clock signal into a plurality of electrical data signals and an electrical clock signal, respectively; and
latching the electrical data signals based on the electrical clock signal.

21. The data receiving method as claimed in claim 20, further comprising inverting the electrical clock signal.

22. An optical communication method, comprising:
inputting a plurality of data signals and a clock signal;
latching the data signals based on the clock signal to output latched data signals;
inverting the logic of the clock signal to output an inverted clock signal;
converting the latched data signals and the inverted clock signal into a plurality of optical signals;
transmitting the optical signals;
receiving the optical signals;
converting the optical signals into a plurality of electrical data signals and an electrical clock signal; and
latching the electrical data signals based on the electrical clock signal.

23. The optical communication method as claimed in claim 22, further comprising inverting the electrical clock signal.

24. A transmitter, comprising:
a data input terminal;
a clock input terminal;
a latch coupled to said data input terminal and said clock input terminal;
an inverter coupled to said clock input terminal; and
a converter coupled to said latch and said inverter.

25. The transmitter as claimed in claim 24, wherein said converter comprises a first laser diode coupled to said latch and a second laser diode coupled to said inverter.

26. The transmitter as claimed in claim 24 or 25, further comprising a buffer disposed between said data input terminal and said latch.

27. A transmitter, comprising:
a plurality of data input terminals;
a clock input terminal;
a plurality of latches coupled to said data input terminals and said clock input terminal;
an inverter coupled to said clock input terminal;
a plurality of converters coupled to said latches and said inverter.

28. A transmitter as claimed in claim 27, wherein each of said converters converts an electrical signal into an optical signal.

29. A receiver, comprising:
a first converter for a data signal, coupled to a transmission line;
a second converter for a clock signal, coupled to a transmission line;
an inverter coupled to said second converter; and
a latch coupled to said first converter and a coupling point between said second converter and said inverter.

30. An optical communication system, comprising:
a transmitter; and
a receiver coupled to said transmitter through a transmission line, wherein
said transmitter comprises:
a data input terminal;
a clock input terminal;
a first latch coupled to said data input terminal and said clock input terminal;
a first inverter coupled to said clock input terminal; and
a first converter coupled to said first latch and said first inverter, and
said receiver comprises:
a second converter for a data signal, coupled to said transmission line;
a third converter for a clock signal, coupled to said transmission line;
a second latch coupled to said second converter and said third converter; and
a second inverter coupled to said third converter.

31. An optical communication system, comprising:
a transmitter; and
a receiver coupled to said transmitter through a transmission line, wherein said transmitter comprises:
a plurality of data input terminals;
a clock input terminal;
a plurality of first latches coupled to said data input terminals and said clock input terminal;
a first inverter coupled to said clock input terminal;
a plurality of first converters coupled to said latches and said inverter, and
said receiver comprises:
a plurality of second converters for a data signal, coupled to said transmission line;
a third converter for a clock signal, coupled to said transmission line;
a plurality of second latches coupled to said second converter and said third converter; and
a second inverter coupled to said third converter.
